# EUROPÄISCHE PATENTSCHRIFT

(11) **EP 0 521 425 B1**
(45) Veröffentlichungstag und Bekanntmachung des Hinweises auf die Patenterteilung: **18.10.1995**
(21) Anmeldenummer: 92110971.6
(22) Anmeldetag: 29.06.1992
(51) Int. Cl.: B65G 57/00, B65G 57/18

(54) **Lattenlegevorrichtung für Holzstapel**
Stick-laying apparatus for lumber piles
Appareil pour placer des lattes pour piles de planches

(30) Priorität: 01.07.1991 DE 4121761
(43) Veröffentlichungstag der Anmeldung: 07.01.1993
(73) Patentinhaber: Gebrüder Linck Maschinenfabrik "Gatterlinck" GmbH & Co. KG, D-77697 Oberkirch (DE)
(72) Erfinder:
(74) Vertreter: Katscher, Helmut, Dipl.-Ing.

(56) Entgegenhaltungen:
- AT-B- 344 606
- DE-A- 3 134 387
- DE-A- 3 409 395
- US-A- 4 801 233
- US-A- 4 810 152
- US-A- 4 822 231

## Beschreibung

Die Erfindung betrifft eine Lattenlegevorrichtung zum Auflegen von Latten auf Holzstapel mit einer über dem Holzstapel endlos umlaufenden horizontalen Förderkette und mit mehreren, über die Länge des Holzstapels verteilten Lattententnahmestationen, die jeweils einen entlang der Förderkette verstellbaren Tragschlitten aufweisen, an dem ein Magazinschacht angeordnet ist, der eine Lage von flach nebeneinanderliegenden Latten aufnimmt, mit jeweils einer Ablegeeinrichtung, die einen um eine horizontale Achse schwenkbaren Entnahmekörper aufweist, der eine in der Ausgangsstellung zum Magazinschacht geöffnete Ausnehmung aufweist, um jeweils eine Latte aus dem Magazinschacht zu übernehmen und auf die Oberseite des Holzstapels abzugeben.

Diese Latten dienen dazu, in Holzstapeln bei der Lagerung und dem Transport einen sicheren Zusammenhalt des Stapels zu erreichen oder bei der Trocknung Abstände zwischen den einzelnen Holzlagen einzuhalten. Eine genaue Ausrichtung der Latten in Längsrichtung der Stapel ist erforderlich, da sich das Holz verziehen würde, wenn die Latten unterhalb und oberhalb jeder Holzlage an unterschiedlichen Stellen liegen.

Das automatische Einbringen von Latten in Holzstapel, mit dem sich auch die vorliegende Erfindung beschäftigt, bereitet in der Praxis vor allem dann Schwierigkeiten, wenn die Sparlatten verzogen oder gekrümmt sind. Bei Latten mit rechteckigem Querschnitt muß sichergestellt sein, daß die Latten flach auf dem Holzstapel abgelegt werden. Wenn eine Latte hochkant abgelegt wird, kommt es zu Störungen bei der Stapelbildung, weil die nächste Holzlage nicht flach aufgelegt werden kann. Solche Störungen müssen durch Überwachungspersonal beseitigt werden; hierzu kann es erforderlich sein, die automatisch arbeitende Holzstapeleinrichtung anzuhalten.

Bei einer bekannten Lattenlegevorrichtung (DE-U 86 08 174) sind mehrere im Abstand zueinander angeordnete Lattenmagazine vorgesehen, die jeweils einen Stapel von flachliegenden Latten aufnehmen. Jeweils die unterste Latte wird horizontal aus dem Magazinschacht seitlich ausgestoßen und fällt im freien Fall auf die Oberseite des Holzstapels. Eine seitliche Verlagerung der Latte infolge des freien Falls wird zwar durch seitliche Führungswände verhindert; da die Latten nur im freien Fall auf die Stapeloberfläche gelangen, ist aber nicht mit Sicherheit ausgeschlossen, daß die Latte hochkant abgelegt wird.

Der seitliche Schlitz, durch den die Latten aus dem Magazinschacht herausgeschoben werden, darf nur so breit sein, daß mit Sicherheit nur eine einzelne Latte ausgeschoben werden kann und daß sich die nachfolgende Latte auch nicht verklemmen kann. Dadurch können aber Schwierigkeiten entstehen, wenn einzelne Latten verzogen oder gekrümmt sind. Wenn die Krümmung an irgendeiner Stelle größer ist als die Breite des Schlitzes, kann die Latte nicht ausgestoßen werden; es kommt zu einer Verstopfung des Magazinschachtes, die nur durch aufwendige Arbeit von Hand beseitigt werden kann. Deshalb ist es erforderlich, beim Einbringen der Latten in den Magazinschacht zu kontrollieren, ob die Latten keine zu große Krümmung aufweisen. Der für diese Kontrolle erforderliche Arbeitsaufwand ist kaum geringer als der für das manuelle Auflegen der Latten.

Bei einer anderen bekannten Lattenlegevorrichtung (AT-B 344 606) wird jeweils ein ganzer Stapel von Latten in einem Lattenmagazin in horizontaler Lage aufgenommen. Das Lattenmagzain ist ortsfest gelagert und wird nach unten auf den Holzstapel geschwenkt; sodann werden die Latten einzeln aus dem Lattenmagazin entnommen und abgelegt. Wenn das Lattenmagazin entleert ist, muß es wieder in die horizontale Lage geschwenkt werden, um einen Stapel von Latten zu übernehmen. Während dieser Zeit kann keine Ablage von Latten erfolgen.

Bei einer anderen bekannten Lattenlegevorrichtung werden die Latten an den einzelnen Lattenentnahmestationen ohne Zwischenspeicher aus den Lattenaufnahmen der endlos umlaufenden Förderkette abgeworfen und gelangen im freien Fall auf die Oberfläche des Holzstapels. Die genaue Lage und Ausrichtung der Latten ist hierbei jedoch nicht mit ausreichender Sicherheit gewährleistet, so daß auch hierbei eine laufende Überwachung erforderlich ist. Außerdem ist es erforderlich, die Förderkette so mit Latten zu bestücken, daß die Sparlatten jeweils im richtigen Zeitpunkt an den einzelnen Lattenentnahmestationen zur Verfügung stehen. Dies erfordert eine verhältnismäßig aufwendige Steuerung der Lattenzuführeinrichtung.

Bei einer bekannten Lattenlegevorrichtung der eingangs genannten Gattung (DE-A-34 09 395) ist in jeder Lattenentnahmestation ein senkrechter, starrer Magazinschacht angeordnet. Zur Überbrücken des sich ändernden Abstandes zwischen dem Magazinschacht und der Oberseite des Holzstapels sind die die Latten aus den Magazinschächten übernehmenden Ablegeeinrichtungen an einem höhenverstellbaren Rahmen angebracht. Durch Verstellung dieses Rahmens werden die Ablegeeinrichtungen jeweils an das untere Ende des Magazinschachts herangebracht und werden dann abgesenkt, um die übernommene Latte in geringem Abstand über der Oberseite des Holzstapels freizugeben.

Diese bekannte Vorrichtung ist insbesondere wegen des höhenverstellbaren Rahmens verhältnismäßig kompliziert aufgebaut. Ihre Arbeitsgeschwindigkeit ist durch die Bewegung dieses Rahmens eingeschränkt. Die Latten müssen sowohl beim Abwurf aus dem Magazinschacht in die Ausnehmung des schwenkbaren Entnahmekörpers als auch insbesondere nach dem Abwurf aus diesem Entnahmekörper jeweils eine wenn auch nur kurze Strecke im freien Fall zurücklegen. Dabei besteht insbesondere bei unregelmäßig geformten Latten die Gefahr des Verkantens.

Aufgabe der Erfindung ist es daher, eine Lattenlegevorrichtung der eingangs genannten Gattung so auszubilden, daß auch bei einem weitestgehend automatisierten Betrieb eine zuverlässige Arbeitsweise auch dann sichergestellt ist, wenn gekrümmte oder verzogene Latten anfallen. Insbesondere soll zuverlässig sichergestellt sein, daß die Latten flachliegend und an der jeweils vorgegebenen Stelle auf die Oberfläche des Holzstapels aufgebracht werden, wobei in einfacher Weise und mit geringem Aufwand eine Anpassung an unterschiedliche geforderte Lattenabstände möglich werden soll.

Diese Aufgabe wird erfindungsgemäß dadurch gelöst, daß den Magazinschacht bildende Magazinarme sich schräg nach unten erstrecken und um eine gemeinsame, sich quer zur Förderrichtung erstreckende Schwenkachse schwenkbar am Tragschlitten gelagert sind, daß die Ablegeeinrichtung am unteren Ende des Magazinschachts angebracht ist, daß unterhalb der Ausnehmung des Entnahmekörpers eine nach unten wegschwenkbare Stützklappe angeordnet ist und daß die Latte wischen dem schwenkbaren Entnahmekörper und der schwenkbaren Stützklappe aufgenommen und nach unten bewegt wird, bis sie auf der Brettoberfläche abgelegt ist.

Durch die Verwendung von schwenkbaren Magazinarmen, an deren unterem Ende sich jeweils eine Ablegeeinrichtung befindet, wird eine sichere und lagegenaue Ablage der Latten auf dem Holzstapel gewährleistet, da die Latten nicht im freien Fall, sondern geführt bis unmittelbar auf den Holzstapel gelangen.

Da die Latten am unteren Ende der Magazinarme nicht frei abgeworfen werden, sondern von den Ablegeeinrichtungen formschlüssig übernommen und auf der Oberseite des Holzstapels abgelegt werden, ist sichergestellt, daß die Latten flachliegend abgelegt werden und sich bei der Ablage nicht verkanten können. Durch die nach unten wegschwenkbare Stützklappe wird erreicht, daß die jeweils unterste, auf dem Holzstapel abzulegende Latte zwischen dem schwenkbaren Entnahmekörper und der schwenkbaren Stützklappe aufgenommen und nach unten bewegt wird, bis sie auf der Bretteroberfläche abgelegt ist.

Gemäß einer bevorzugten Ausführungsform der Erfindung ist vorgesehen, daß der schwenkbare Entnahmekörper und die schwenkbare Stützklappe mit einem gemeinsamen Schwenkantrieb verbunden sind. Dadurch wird in konstruktiv einfacher Weise ein genauer Synchronlauf dieser beiden Teile erreicht.

Weitere vorteilhafte Ausgestaltungen des Erfindungsgedankens sind Gegenstand weiterer abhängiger Ansprüche.

Die Erfindung wird nachfolgend an Ausführungsbeispielen näher erläutert, die in der Zeichnung dargestellt sind. Es zeigt:

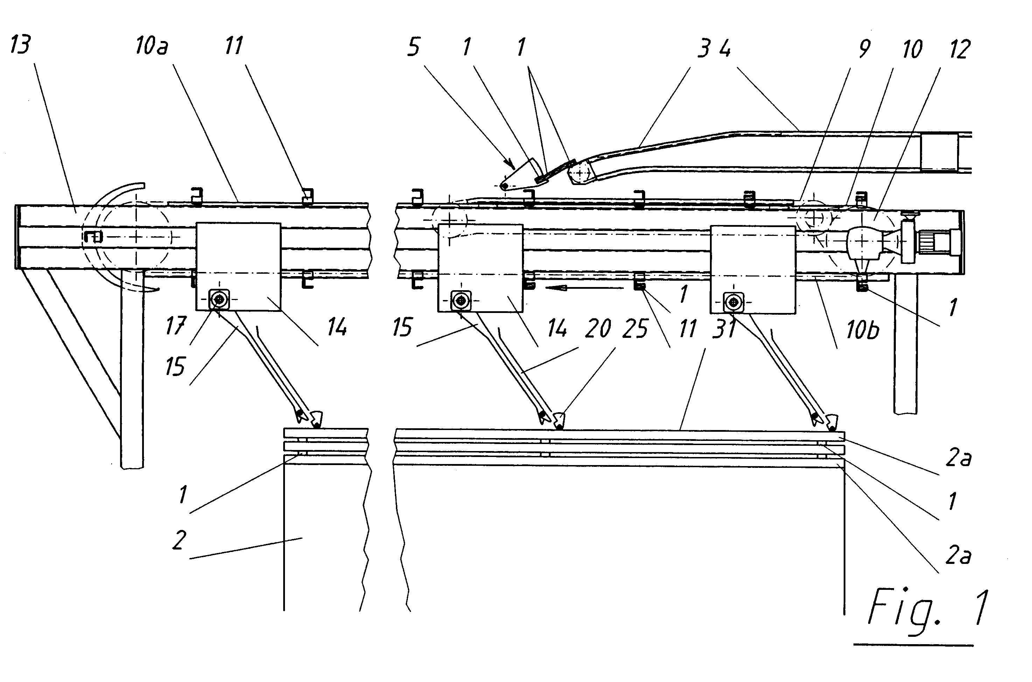

Fig. 1 eine vereinfachte Seitenansicht einer Lattenlegevorrichtung zum Auflegen von Latten auf Holzstapel,
Fig. 2 eine vergrößerte Teilansicht einer Lattenentnahmestation mit einem der beiden Magazinarme,
Fig. 3 eine Ansicht in Richtung des Pfeiles III in Fig. 2,
Fig. 4 eine vergrößerte Teilansicht der Lattenzuführeinrichtung der Vorrichtung nach Fig. 1,
Fig. 5 in einer Seitenansicht ähnlich der Fig. 1 eine abgewandelte Ausführungsform zum Auflegen von Latten in zwei unterschiedlichen Abmessungen,
Fig. 6 in einer Ansicht ähnlich der Fig. 2 eine abgewandelte Ausführungsform der Ablegeeinrichtung und
Fig. 7 in einer Ansicht ähnlich der Fig. 1 eine abgewandelte Ausführungsform der Übergabevorrichtung.

Die dargestellte Lattenlegevorrichtung dient dazu, jeweils mehrere Latten 1 auf der Oberseite eines Holzstapels 2 abzulegen, bevor durch eine (nicht dargestellte) automatische Stapeleinrichtung eine weitere Holzlage 2a aufgebracht wird.

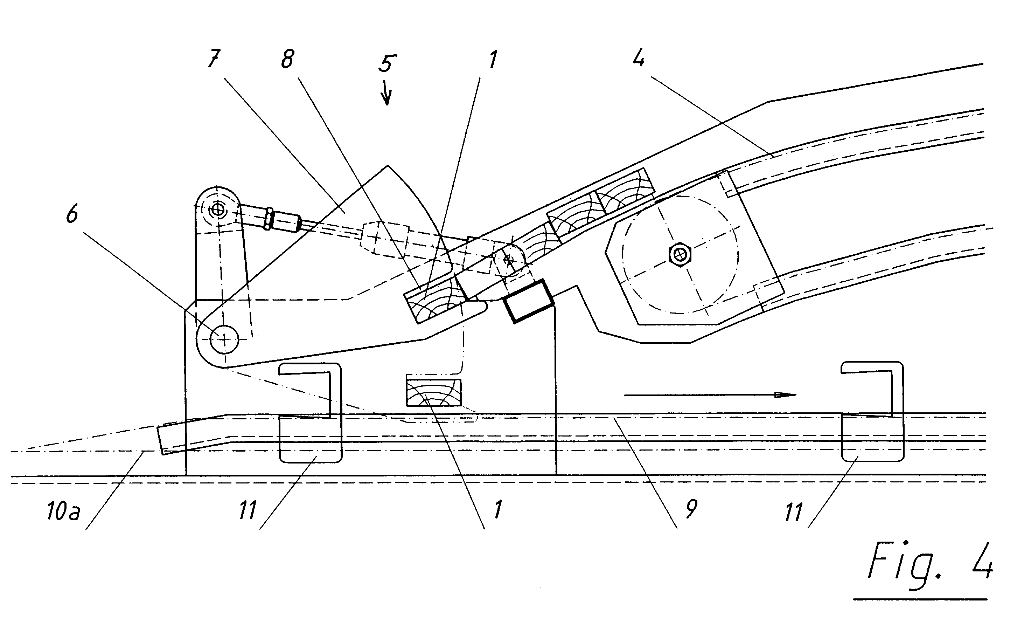

Die Latten 1 werden in einer Lattenzuführeinrichtung 3 zugeführt. Die Lattenzuführeinrichtung 3 weist eine endlos umlaufende Fördereinrichtung 4 auf, beispielsweise ein Förderband oder Förderketten, an deren Ende sich mehrere Latten 1 flach nebeneinanderliegend ansammeln. Jeweils die unterste Latte 1 wird in einer Übergabevorrichtung 5 (Fig. 4) von zwei auf einer gemeinsamen Schwenkachse 6 angeordneten Schwenkkörper 7 in jeweils einer Ausnehmung 8 aufgenommen und durch eine Schwenkbewegung nach unten auf ein Beschleunigungsförderer 9 abgelegt.

Der Beschleunigungsförderer 9 ist zwischen den beiden Strängen des Obertrums 10a einer endlos umlaufenden horizontalen Förderkette 10 parallel angeordnet und wird mit höherer Fördergeschwindigkeit als diese angetrieben.

Die Förderkette 10 weist im Abstand angeordnete, jeweils entgegen zur Förderrichtung offene Lattenaufnahmen 11 auf. Die von der Übergabevorrichtung 5 einzeln übergebene Latte 1 wird durch des Beschleunigungsförderer 9 in die jeweils nächsten voranlaufenden Lattenaufnahmen 11 hineingefahren und bleibt dort liegen.

Über angetriebene Kettenumlenkräder 12 gelangen die mit den Latten 1 gefüllten Lattenaufnahmen 11 zum Untertrum 10b der Förderkette 10, die sich parallel im Abstand horizontal über dem Holzstapel 2 erstreckt.

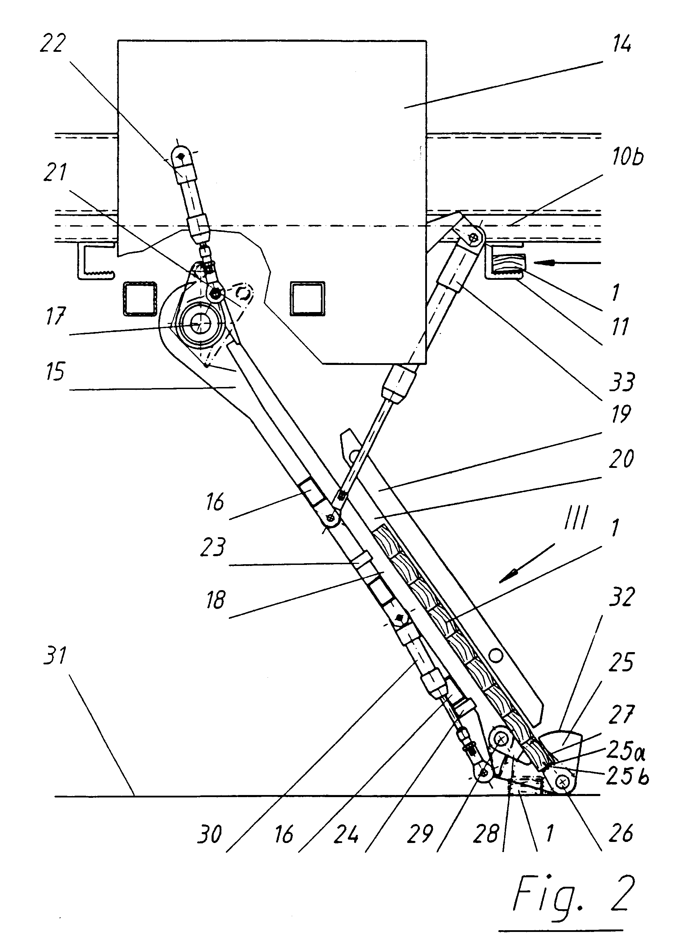

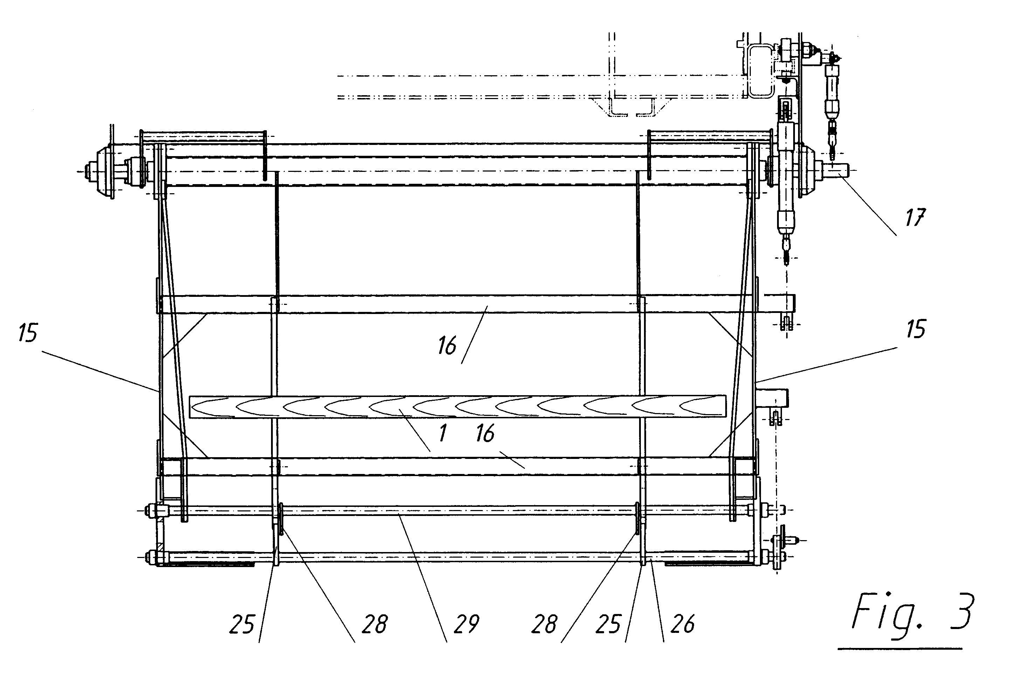

Entlang einem Rahmen 13, an dem auch die Förderkette 10 gelagert und geführt ist, sind mehrere Tragschlitten 14 in Abständen zueinander in Längsrichtung der Förderkette 10 verstellbar angeordnet. Bei dem dargestellten Ausführungsbeispiel sind an jedem Tragschlitten 14 zwei sich schräg nach unten erstreckende, in seitlichem Abstand nebeneinander angeordnete Magazinarme 15 angebracht (Fig. 2). Die beiden Magazinarme 15 sind miteinander durch Querholme 16 (Fig. 3) verbunden und sind an einer gemeinsamen, sich quer zur Förderrichtung der Förderkette 10 erstreckenden Schwenkachse 17 schwenkbar am Tragschlitten 14 gelagert. Ein am Tragschlitten 14 angreifender Druckmittelzylinder 33 dient zum Anheben und Absenken der Magazinarme 15.

Entlang jedem Magazinarm 15 ist zwischen einer unteren Schiene 18 und einer Deckschiene 19 ein sich entlang dem Magazinarm 15 erstreckender Magazinschacht 20 gebildet, der so breit ist, daß er eine Lage von flach nebeneinanderliegenden Latten 1 aufnehmen kann, wie in Fig. 2 angedeutet ist. Ein am oberen Ende der Magazinarme 5 schwenkbar am Tragschlitten 14 gelagerter Abstreifer 21 kann durch einen Druckmittelzylinder 22 so gesteuert werden, daß er in die Bewegungsbahn der Latten 1 geschwenkt wird, die in den Lattenaufnahmen 11 des Untertrums 10b der Förderkette 10 herangefördert werden. Dadurch werden die Latten 1 aus den Lattenaufnahmen 11 herausgedrückt und gelangen in den Magazinschacht 20.

Wenn der Magazinschacht 20 gefüllt ist, gibt ein Geber 23 ein Signal an eine (nicht dargestellte) Steuereinrichtung, die den Druckmittelzylinder 22 betätigt und den Abstreifer 21 aus der Bewegungsbahn der Latten 1 herausschwenkt, so daß keine Latten 1 nachgefüllt werden. Ein am unteren Ende des Magazinarms 15 angebrachter weiterer Geber 24 gibt ein Signal, sobald der Magazinschacht 20 weitestgehend entleert ist. Daraufhin wird der Abstreifer 21 wieder so gesteuert, daß er weitere Latten 1 aus der Förderkette 10 entnimmt und den Magazinschacht 20 auffüllt.

Am unteren Ende der beiden gemeinsam schwenkbaren Magazinarme 15 ist jeweils ein Entnahmekörper 25 um eine horizontale Schwenkachse 26 schwenkbar gelagert. In seiner in Fig. 2 dargestellten Ausgangsstellung ist eine Ausnehmung 27 des Entnahmekörpers 25 zum Magazinschacht 20 hin geöffnet und nimmt die unterste Latte 1 auf. Unterhalb dieser Ausnehmung 27 ist eine Stützklappe 28 angeordnet, die um eine horizontale Schwenkachse 29 nach unten wegschwenkbar ist und in der Ausgangsstellung (Fig. 2) als Fortsetzung der Führungsschiene 18 eine untere Auflage für die jeweils unterste Latte 1 bildet.

Der Entnahmekörper 25 und die Stützklappe 28 bzw. deren zugeordnete Schwenkachsen 26 bzw. 29 sind mit einem gemeinsamen Schwenkantrieb verbunden, der durch einen Druckmittelzylinder 30 und Verbindungskabel gebildet wird. Bei Betätigung des Schwenkantriebs 30 werden der Entnahmekörper 25 und die Stützklappe 28 so nach unten geschwenkt, daß die Latte 1 in der in Fig. 2 mit strichpunktierten Linien angedeuteten Stellung auf der Oberseite 31 des Holzstapels 2 abgelegt wird. Die jeweils vom Entnahmekörper 25 aufgenommene Latte 1 liegt dabei an einer Stirnfläche 25a am Entnahmekörper 25 an, die mit Zacken 25b besetzt ist. Die Zacken 25b unterstützen die Mitnahme der Latte 1 und verhindern, daß sich die Latte 1 bei der Schwenkbewegung des Entnahmekörpers 25 verkantet.

Der Entnahmekörper 25 weist oberhalb seiner Ausnehmung 27 eine Stützfläche 32 auf, die von einer Umfangsfläche gebildet wird. Diese Stützfläche 32 sperrt beim Ausführungsbeispiel nach Fig. 2 bei nach unten geschwenktem Entnahmekörper 25 den Auslaß des Magazinschachtes 20 und verhindert auf diese Weise ein Nachrutschen der nächsten Latte 1. Erst wenn der Entnahmekörper 25 und die Stützklappe 28 wieder in die in Fig. 2 gezeigte Ausgangsstellung zurückgeschwenkt wurden, wird die Ausnehmung 27 freigegeben und die nächste Latte 1 kann in diese Ausnehmung 27 eintreten.

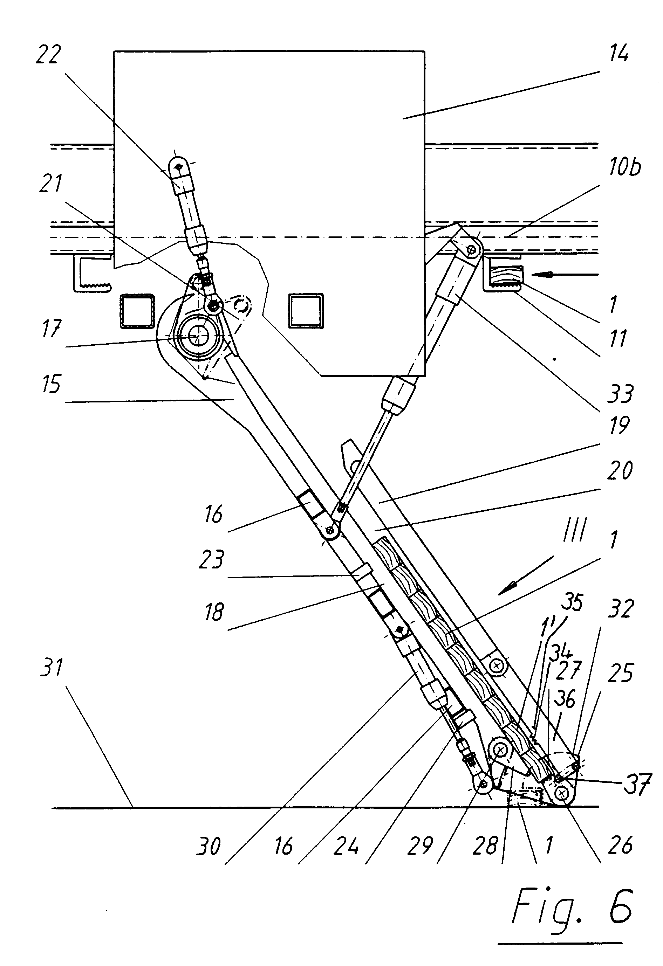

Fig. 6 zeigt eine andere Möglichkeit, die nachfolgenden Latten 1' im Magazinschacht 20 während des Entnahmevorgangs zu halten. Eine mit Zähnen 34 versehene Haltebacke 35 ist an einem Hebel 36 angebracht, der mit seinem einen Ende an einem Lager 37 über dem unteren Ende des Magazinschachtes 20 an der Deckschiene 19 des Magazinarms 15 gelagert ist. Das andere Ende des Hebels 36 stützt sich unter Schwerkrafteinfluß oder Federwirkung an einem am Entnahmekörper 25 angebrachten Widerlagerbolzen 37 ab.

Wird der Entnahmekörper 25 nach unten geschwenkt, so senkt sich der Hebel 36 ab, bis die Haltebacke 35 mit der der entnommenen Latte 1 nachfolgenden Latte 1' in Eingriff tritt und diese festhält. Die Latte 1' kann daher erst nachrutschen, wenn die vorher entnommene Latte 1 abgelegt ist. Dadurch werden Störungen bei der Entnahme auch dann vermieden, wenn einzelne Latten nicht die vorgegebene einheitliche Breite aufweisen.

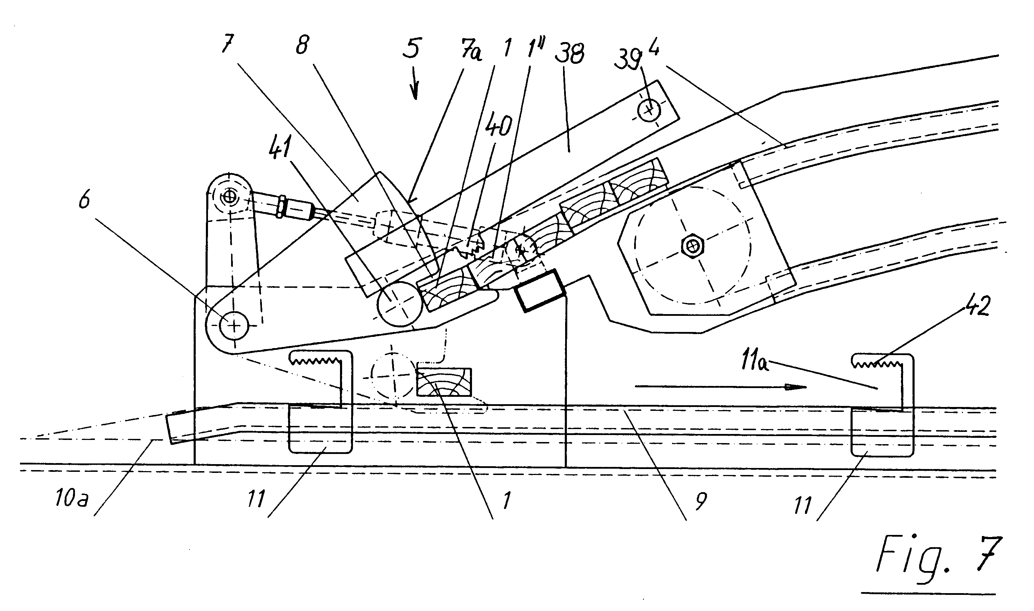

In Fig. 7 ist in einer der Fig. 4 entsprechenden Darstellungsweise eine abgewandelte Ausführungsform der Übergabevorrichtung 5 gezeigt. Das Zurückhalten der Latte 1'', die der jeweils übernommenen Latte 1 nachfolgt, geschieht hier in ähnlicher Weise wie bei der in Fig. 6 dargestellten Entnahmevorrichtung. An der Übergabevorrichtung 5 ist ein Hebel 38 an seinem einen Ende in einem Gelenk 39 schwenkbar gelagert. Der Hebel 38 trägt eine Haltebacke 40, die über der jeweils nachfolgenden Latte 1'' angeordnet ist. Mit seinem anderen, freien Ende stützt sich er Hebel 38 auf einem Widerlagerbolzen 41 ab, der am Schwenkkörper 7 angebracht ist.

Wenn der Schwenkkörper 7 nach unten geschwenkt wird, um die Latte 1 auf den Beschleunigungsförderer 9 abzulegen, schwenkt der Hebel 38 unter Schwerkrafteinfluß oder Federwirkung nach unten und die Haltebacke 40 tritt mit der nachfolgenden Latte 1'' in Eingriff und hält diese fest, bis der Übergabevorgang abgeschlossen ist. Erst danach wird der Hebel 38 wieder angehoben, wenn sich der Schwenkkörper 7 in seiner Ausgangsstellung befindet; die Haltebacke 7 gibt die Latte 1'' frei, die dann in die Ausnehmung 8 des Schwenkkörpers 7 nachrutschen kann.

Gegenüber der in Fig. 4 dargestellten Ausführungsform, bei der die nachfolgende Latte durch eine Umfangsfläche des Schwenkkörpers gehalten wird, ist bei der Ausführungsform nach Fig. 7 die Umfangsfläche 7a des Schwenkkörpers 7 zurückgesetzt; mit anderen Worten die Ausnehmung 8 weist eine wesentlich geringere Tiefe als die vorgegebene einheitliche Breite der Latten 1 auf. Auch wenn ausnahmsweise eine Latte von wesentlich geringerer Breite übergeben wird, kollidiert der Schwenkkörper 7 nicht mit der nachfolgenden Latte 1'', weil diese nicht sofort nachrutscht, sondern während des gesamten Übergabevorgangs durch die Haltebacke 40 festgehalten wird.

Fig. 7 zeigt außerdem, daß die Lattenaufnahmen 11 an der Oberseite ihrer zur Aufnahme jeweils einer Latte 1 bestimmten Ausnehmung 11a mit Zacken 42 versehen sein können, die eine sicherere Handhabung der Latten 1 gewährleisten.

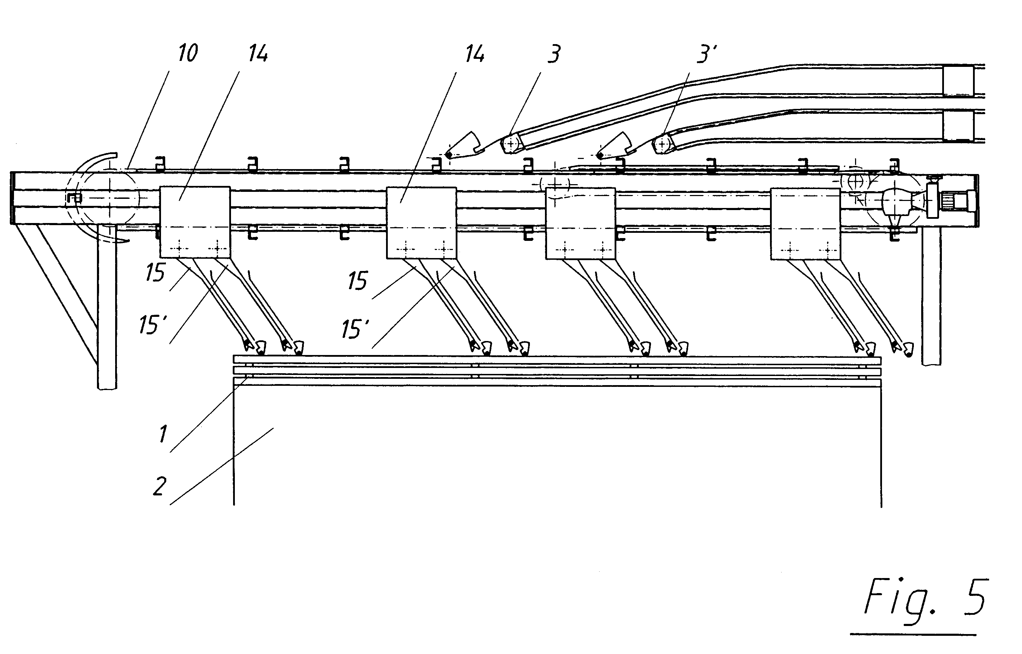

Fig. 5 zeigt eine abgewandelte Ausführungsform einer Lattenlegevorrichtung. Hierbei sind an jedem Tragschlitten 14 zwei Gruppen von jeweils zwei Magazinarmen 15,15' schwenkbar gelagert, die gemeinsam jeweils so geschwenkt und betätigt werden können, wie dies schon vorher beschrieben wurde.

Oberhalb der Förderkette 10 sind zwei Lattenzuführeinrichtungen 3 und 3' angeordnet, die beide im wesentlichen so aufgebaut sind und so arbeiten, wie dies beim vorigen Beispiel beschrieben wurde.

Mit der Lattenlegevorrichtung nach Fig. 5 können zwei Arten von Latten 1 mit unterschiedlichen Querschnittsabmessungen zugeführt und aufgelegt werden. Dabei ist zu berücksichtigen, daß in der Praxis der Sägewerksbetriebe üblicherweise zwei Arten von Latten verwendet werden. Diejenigen Latten, die in die Holzstapel 2 vor dem Einbringen in die Trockenkammer eingelegt werden, werden nach dem Trocknungsvorgang entnommen; sie verbleiben im Sägewerksbetrieb und werden im Kreislauf zurückgefördert und immer wieder verwendet. Hierfür werden deshalb verhältnismäßig stabile Latten verwendet, die eine längere Lebensdauer haben.

Diejenigen Latten, die in die Holzstapel eingelegt werden, die den Sägewerksbetrieb verlassen, werden jedoch nicht wiederverwendet und verbleiben als Abfall beim Abnehmer. Deshalb werden hierfür üblicherweise dünnere bzw. minderwertige Latten, sogenannte Sparlatten, verwendet.

Die in Fig. 5 gezeigte Ausführungsform mit zwei Lattenzuführeinrichtungen 3, 3' und jeweils zwei Gruppen von Magazinarmen 15, 15' an jedem Tragschlitten 14 ermöglicht es, wahlweise unterschiedliche Latten aufzulegen. Hierzu werden die Magazinarme 15 und 15' und wahlweise die Entnahmekörper 25, 25' der beiden Gruppen betätigt. Die Magazinarme der jeweils anderen Gruppe sind dabei ebenfalls mit Latten gefüllt und stehen deshalb für eine rasche Umstellung bereit.

## Patentansprüche

1. Lattenlegevorrichtung zum Auflegen von Latten (1) auf Holzstapel (2), mit einer über dem Holzstapel (2) endlos umlaufenden horizontalen Förderkette (10) und mit mehreren, über die Länge des Holzstapels (2) verteilten Lattententnahmestationen, die jeweils einen entlang der Förderkette (10) verstellbaren Tragschlitten (14) aufweisen, an dem ein Magazinschacht (20) angeordnet ist, der eine Lage von flach nebeneinanderliegenden Latten (1) aufnimmt, mit jeweils einer Ablegeeinrichtung, die einen um eine horizontale Achse (26) schwenkbaren Entnahmekörper (25) aufweist, der eine in der Ausgangsstellung zum Magazinschacht (20) geöffnete Ausnehmung (27) aufweist, um jeweils eine Latte (1) aus dem Magazinschacht (20) zu übernehmen und auf die Oberseite (31) des Holzstapels (2) abzugeben, dadurch gekennzeichnet, daß den Magazinschacht (20) bildende Magazinarme (15) sich schräg nach unten erstrecken und um eine gemeinsame, sich quer zur Förderrichtung erstreckende Schwenkachse (17) schwenkbar am Tragschlitten (14) gelagert sind, daß die Ablegeeinrichtung am unteren Ende des Magazinschachts (20) angebracht ist, daß unterhalb der Ausnehmung (27) des Entnahmekörpers (25) eine nach unten wegschwenkbare Stützklappe (28) angeordnet ist und daß die Latte (1) zwischen dem schwenkbaren Entnahmekörper (25) und der schwenkbaren Stützklappe (28) aufgenommen und nach unten bewegt wird, bis sie auf der Brettoberfläche abgelegt ist.

2. Lattenlegevorrichtung nach Anspruch 1, dadurch gekennzeichnet, daß der schwenkbare Entnahmekörper (25) und die schwenkbare Stützklappe (28) mit einem gemeinsamen Schwenkantrieb (30) verbunden sind.

3. Lattenlegevorrichtung nach Anspruch 1, dadurch gekennzeichnet, daß der Entnahmekörper (25) oberhalb der Ausnehmung (27) eine Stützfläche (32) aufweist, die bei nach unten geschwenktem Entnahmekörper (25) den Magazinschacht (20) sperrt.

4. Lattenlegevorrichtung nach Anspruch 1, dadurch gekennzeichnet, daß der Entnahmekörper (25) an einer Stirnfläche (25a), an der die entnommene Latte (1) anliegt, mit Zacken (25b) besetzt ist.

5. Lattenlegevorrichtung nach Anspruch 1, dadurch gekennzeichnet, daß über dem unteren Ende des Magazinschachtes (20) eine Haltebacke (35) angeordnet ist, die sich beim Verschwenken des Entnahmekörpers (25) auf die jeweils nächstfolgende Latte (1') absenkt und diese festhält, bis die Ablage der vorangehenden Latte (1) abgeschlossen ist.

6. Lattenlegevorrichtung nach Anspruch 1, dadurch gekennzeichnet, daß an jedem Tragschlitten (14) zwei Gruppen von jeweils zwei Magazinarmen (15, 15') gelagert sind und daß zwei Lattenzuführeinrichtungen (3, 3') zur Zufuhr unterschiedlicher Latten (1) vorgesehen sind.

## Claims

1. Stick-laying apparatus for the placing of sticks (1) onto lumber piles (2), with a horizontal chain conveyor (10) circulating endlessly over the lumber pile (2) and with several stick removal stations distributed over the length of the lumber pile (2), each of which has a carriage (14) which can be adjusted along the chain conveyor (10) on which a magazine shaft (20) is located, which takes up a layer of sticks (1) lying flat next to each other, in each case with a laying-down mechanism which has a removing body (25) which can be slewed around a horizontal axis (26) which in the outlet position has a recess (27) open to the magazine shaft (20), in order to take in each case one stick (1) from the magazine shaft (20) and to deliver it onto the top (31) of the lumber pile (2), characterized in that magazine arms (15) forming the magazine shaft (20) extend obliquely downwards and are supported on the carriage (14) so that it can be slewed around a common slewing axis (17) extending transversely to the conveyor direction, that the laying-down mechanism is fitted to the bottom end of the magazine shaft (20), that beneath the recess (27) of the removing body (25) a support flap (28) which can be swung away downwards is arranged and that the stick (1) is held and moved downwards between the slewable removing body (25) and the pivoted support flap (28) until it has been laid on the surface of the plank.

2. Stick-laying apparatus according to Claim 1, characterized in that the slewable removing body (25) and the pivoted support flap (28) are joined to a common slewing drive (30).

3. Stick-laying apparatus according to Claim 1, characterized in that the removing body (25) has a support surface (32) above the recess (27), which obstructs the magazine shaft (20) when the removing body (25) is swung downwards.

4. Stick-laying apparatus according to Claim 1, characterized in that the removing body (25) is fitted with indentations (25b) on one front face (25a) against which the removed stick (1) lies.

5. Stick-laying apparatus according to Claim 1, characterized in that, a holding jaw (35) is located over the bottom end of the magazine shaft (20), which drops in each case to the next following stick (1') when the removing body (25) is slewed and holds the latter fast until the laying of the preceding stick (1) has been completed.

6. Stick-laying apparatus according to Claim 1, characterized in that two groups, in each case of two magazine arms (15, 15') are supported on each carriage (14) and that two stick feed mechanisms (3, 3') are provided for the feed of different sticks (1).

## Revendications

1. Dispositif d'application de lattes (1) sur une pile de planches (2), comportant une chaîne transporteuse (10) horizontale tournant sans fin au-dessus de la pile de planches (2) et plusieurs postes de prélèvement de lattes répartis sur la longueur de la pile de planches (2), postes qui présentent, respectivement, un chariot porteur (14) déplaçable le long de la chaîne transporteuse (10), sur lequel est agencé un puits-magasin (20), qui reçoit une couche de lattes (1) disposées côte à côte à plat, avec, respectivement, un dispositif de dépôt qui présente un élément préleveur (25) articulé autour d'un axe horizontal (26), qui comporte un évidement (27) ouvert sur le puits-magasin (20) dans la position de sortie, pour transférer respectivement une latte (1) du puits-magasin (20) et la déposer sur la partie supérieure (31) de la pile de planches (2), caractérisé en ce que les bras (15) du magasin formant le puits-magasin (20) s'étendent vers le pas en position inclinée et sont montés sur le chariot porteur (14) de manière à pouvoir pivoter autour d'un pivot commun (17) s'étendant transversalement à la direction de transport, en ce que le dispositif de dépôt est monté à l'extrémité inférieure du puits-magasin (20), en ce qu'un volet d'appui (28) pivotant vers le bas est agencé en dessous de l'évidement (27) de l'élément préleveur (25) et en ce que la latte (1) est reçue entre l'élément préleveur pivotant (25) et le volet d'appui pivotant (28) et est déplacée vers le bas jusqu'à ce qu'elle soit déposée sur la surface des planches.

2. Dispositif d'application de lattes selon la revendication 1, caractérisé en ce que l'élément préleveur pivotant (25) et le volet d'appui pivotant (28) sont reliés par une commande de pivotement (30).

3. Dispositif d'application de lattes selon la revendication 1, caractérisé en ce que l'élément préleveur (25) présente, au-dessus de l'évidement (27), une surface d'appui (32) qui bloque le puits-magasin (20) lorsque l'élément préleveur (25) a pivoté vers le bas.

4. Dispositif d'application de lattes selon la revendication 1, caractérisé en ce que l'élément préleveur (25) présente des dents (25b) sur une surface frontale (25a) sur laquelle s'applique la latte prélevée (1).

5. Dispositif d'application de lattes selon la revendication 1, caractérisé en ce que, sur l'extrémité inférieure du puits-magasin (20), est agencé un mors de retenue (35) qui s'abaisse, lors du pivotement de l'élément préleveur (25) sur la latte suivante respective (1'), et maintient celle-ci jusqu'à ce que le dépôt de la latte antérieure soit terminé.

6. Dispositif d'application de lattes selon la revendication 1, caractérisé en ce que deux groupes de deux bras de magasin (15, 15'), respectivement, sont montés sur chaque chariot porteur (14) et en ce que deux dispositifs d'alimentation en lattes (3, 3') sont prévus pour acheminer différentes lattes (1).
